# EUROPÄISCHE PATENTANMELDUNG

(11) **EP 3 531 496 A1**
(43) Veröffentlichungstag der Anmeldung: **28.08.2019**
(21) Anmeldenummer: 18157750.3
(22) Anmeldetag: 21.02.2018
(51) Int. Cl.: H01M 10/48, G01R 31/36, H01M 10/42

(54) **SENSORVORRICHTUNG UND VERFAHREN ZU DEREN BETRIEB**

(71) Anmelder: Siemens Aktiengesellschaft, 80333 München (DE)
(72) Erfinder: Zettner, Jürgen, 90587 Veitsbronn (DE); Scheibner, Dirk, 90473 Nürnberg (DE)

(57) **Zusammenfassung**

Die Erfindung betrifft eine Sensorvorrichtung (5) und ein Verfahren zu deren Betrieb. Die Sensorvorrichtung (5) umfasst eine Versorgungsbatterie (7) zur Energieversorgung der Sensorvorrichtung (5), eine Sensoreinheit (8), mit der Betriebszustandsdaten der Versorgungsbatterie (7) erfassbar sind, und eine Kommunikationseinheit (9), mit der die Betriebszustandsdaten einem Auswertesystem (17) übermittelbar sind. Bei dem Verfahren werden mit der Sensoreinheit (8) zu verschiedenen Messzeitpunkten (t₁, t₂) Betriebszustandsdaten der Versorgungsbatterie (7) erfasst, mit der Kommunikationseinheit (9) werden die Betriebszustandsdaten an das Auswertesystem (17) übermittelt und von dem Auswertesystem (17) wird ein Energiebedarf der Sensorvorrichtung (5) ermittelt und anhand der Betriebszustandsdaten und des Energiebedarfs eine Handlungsempfehlung zum optimierten Betrieb der Sensorvorrichtung (5) generiert.

## Beschreibung

Die Erfindung betrifft eine batteriebetriebene Sensorvorrichtung und ein Verfahren zum Betrieb einer derartigen Sensorvorrichtung.

Insbesondere betrifft die Erfindung eine Sensorvorrichtung zur Überwachung eines Antriebssystems, insbesondere zur Überwachung einer elektrischen Maschine, und ein Verfahren zum Betrieb einer derartigen Sensorvorrichtung. Insbesondere zur Überwachung elektrischer Maschinen werden häufig Sensorvorrichtungen eingesetzt, die als Smart Sensor Boxen oder Condition Monitoring Boxen (CM-Boxen) bezeichnet werden und Messdaten, beispielsweise von Schwingungen oder Temperaturen, erfassen. Um Verkabelungsaufwand zu vermeiden oder zu reduzieren, weisen derartige Sensorvorrichtungen häufig Batterien zu ihrer Energieversorgung und kabellose Kommunikationsvorrichtungen, insbesondere zur kabellosen Übermittlung der erfassten Messdaten, auf, beispielsweise Kommunikationsvorrichtungen zur Kommunikation mittels Funksignalen gemäß einem Bluetooth- oder WLAN-Standard (WLAN = Wireless Local Area Network).

Unter einer Batterie wird hier ein Speicher für elektrische Energie auf elektrochemischer Basis verstanden, der wiederaufladbar oder nicht wiederaufladbar ausgebildet sein kann. Insbesondere werden hier also Akkumulatoren zu den Batterien gezählt. Eine Batterie für eine Sensorvorrichtung wird, insbesondere hinsichtlich ihrer Kapazität und ihren Entladeströmen, in Abhängigkeit von einem zu erwartenden Energiebedarf der Sensorvorrichtung sowie von einem angenommenen Temperaturprofil der Sensorvorrichtung ausgelegt. Im Fall eines Akkumulators beeinflussen neben dem Entladestrom viele weitere Einflussgrößen das Speichervermögen des Akkumulators, beispielsweise die Temperatur, Alterungseffekte, der Recovery-Effekt, die zunehmenden Verluste an einem Innenwiderstand des Akkumulators sowie die begrenzte Geschwindigkeit der elektrochemischen Prozesse und Ladungstransportvorgänge im Akkumulator. Um einen Akkumulator optimal für eine Sensorvorrichtung auszulegen, sind daher auch diese Einflussgrößen zu berücksichtigen.

Jedoch lassen sich viele dieser für die Auslegung einer Batterie relevanten Größen im Voraus nur sehr schwierig beziehungsweise mit großen Unsicherheiten abschätzen. Beispielsweise umfasst der Energiebedarf einer Sensorvorrichtung sowohl den Energiebedarf für die Erfassung und Verarbeitung von Messdaten als auch den Energiebedarf für die (Funk-)Kommunikation. Bei der Abschätzung des Energiebedarfes ist ferner zu berücksichtigen, dass eine Sensorvorrichtung in der Regel in einem Mischbetrieb mit verschiedenen Betriebsmodi betrieben wird, die sich hinsichtlich ihres jeweiligen Energiebedarfes voneinander unterscheiden. Die im Realbetrieb der Sensorvorrichtung auf die einzelnen Betriebsmodi entfallenden Betriebszeiten und damit der jeweils für einen Betriebsmodus insgesamt anfallende Energiebedarf lassen sich im Voraus nur schwierig abschätzen, da beispielsweise in kritischen Betriebszuständen eines mit der Sensorvorrichtung überwachten Antriebssystems Messdaten in kurzen Zeitabständen angefordert werden, um den Zustand des Antriebssystems schnell und zuverlässig zu überwachen.

Ferner sind sowohl der Energiebedarf einer Sensorvorrichtung als auch die Kapazität und Alterungseffekte einer Batterie stark temperaturabhängig. Eine Vorhersage eines Temperaturverlaufs der Temperatur einer Sensorvorrichtung ist jedoch ebenfalls mit großen Unsicherheiten behaftet.

Es ist daher äußerst schwierig und praktisch nicht möglich, für eine batteriebetriebene Sensorvorrichtung im Voraus zuverlässig eine dem realen Betrieb der Sensorvorrichtung optimal angepasste Batterie zu bestimmen. Eine in einer Sensorvorrichtung verbaute Batterie erweist sich daher im Betrieb der Sensorvorrichtung in der Regel entweder als unterdimensioniert oder als überdimensioniert. Im Fall einer unterdimensionierten Batterie wird die Funktionstüchtigkeit der Sensorvorrichtung beeinträchtigt, insbesondere ist ein Ausfall der Sensorvorrichtung vor dem Ablauf einer für die Sensorvorrichtung vorgesehenen Betriebsdauer möglich. Im Fall einer überdimensionierten Batterie wird die Sensorvorrichtung in der Regel nicht kostenoptimal ausgeführt, da eine zu aufwendige und daher zu teure Batterie eingesetzt wird.

Der Erfindung liegt die Aufgabe zugrunde, eine insbesondere hinsichtlich ihrer Auslegung und ihres Betriebs verbesserte batteriebetriebene Sensorvorrichtung anzugeben.

Die Aufgabe wird erfindungsgemäß durch ein Verfahren mit den Merkmalen des Anspruchs 1 und eine Sensorvorrichtung mit den Merkmalen des Anspruchs 13 gelöst.

Vorteilhafte Ausgestaltungen der Erfindung sind Gegenstand der abhängigen Ansprüche.

Das erfindungsgemäße Verfahren betrifft den Betrieb einer Sensorvorrichtung, die eine Versorgungsbatterie zur Energieversorgung der Sensorvorrichtung, eine Sensoreinheit, mit der Betriebszustandsdaten der Versorgungsbatterie erfassbar sind, und eine Kommunikationseinheit, mit der die Betriebszustandsdaten einem Auswertesystem übermittelbar sind, aufweist. Bei dem Verfahren werden mit der Sensoreinheit zu verschiedenen Messzeitpunkten Betriebszustandsdaten erfasst, mit der Kommunikationseinheit werden die Betriebszustandsdaten an das Auswertesystem übermittelt und von dem Auswertesystem wird ein Energiebedarf der Sensorvorrichtung ermittelt und anhand der Betriebszustandsdaten und des Energiebedarfs eine Handlungsempfehlung zum optimierten Betrieb der Sensorvorrichtung generiert.

Die Erfindung sieht also vor, mit der Sensorvorrichtung neben Messdaten, deren Erfassung die eigentliche Aufgabe der Sensorvorrichtung ist, auch Betriebszustandsdaten der Versorgungsbatterie zu erfassen und einem Auswertesystem zu übermitteln. Anhand der Betriebszustandsdaten und eines von dem Auswertesystem ermittelten Energiebedarfs der Sensorvorrichtung wird von dem Auswertesystem eine Handlungsempfehlung zum optimierten Betrieb der Sensorvorrichtung generiert. Die Erfindung ermöglicht, im realen Betrieb der Sensorvorrichtung den Betriebszustand der Versorgungsbatterie und den Energiebedarf der Sensorvorrichtung zu überwachen, um daraus einen optimierten Betrieb der Sensorvorrichtung abzuleiten. Die Erfindung berücksichtigt, dass, wie oben bereits ausgeführt wurde, der Energiebedarf der Sensorvorrichtung und für die Versorgungsbatterie relevante Betriebsparameter wie der Verlauf der Batterietemperatur nur schwierig und mit großen Unsicherheiten vorhersagbar sind. Die Überwachung und Auswertung des Energiebedarfs der Sensorvorrichtung und des Betriebszustands der Versorgungsbatterie im realen Betrieb der Sensorvorrichtung ermöglicht einen optimierten Betrieb der Sensorvorrichtung durch Anpassung des Betriebs der Sensorvorrichtung an die im realen Betrieb auftretenden Bedingungen gemäß der generierten Handlungsempfehlung.

Eine Ausgestaltung der Erfindung sieht vor, dass als Betriebszustandsdaten Batteriespannungen und Batterietemperaturen der Versorgungsbatterie erfasst werden. Die Batteriespannung und die Batterietemperatur sind die für den Betrieb der Sensorvorrichtung wichtigsten Indikatoren des Betriebszustands der Versorgungsbatterie, da von ihrem Verlauf insbesondere eine verfügbare Restkapazität der Versorgungsbatterie abhängt beziehungsweise ableitbar ist und weitere für die Beurteilung des Betriebszustands der Versorgungsbatterie relevante Größen abhängen. Beispielsweise kann aus den zu verschiedenen Messzeitpunkten erfassten Batteriespannungen und den zugehörigen Batterieentladeströmen eine zeitliche Entwicklung eines Batterieinnenwiderstandes der Versorgungsbatterie ermittelt werden, wenn die Batterieentladeströme bekannt sind oder erfasst werden. Aus der zeitlichen Entwicklung des Batterieinnenwiderstandes können vorteilhaft Rückschlüsse auf die Alterungsentwicklung der Versorgungsbatterie gewonnen werden.

Eine weitere Ausgestaltung der Erfindung sieht vor, dass als Betriebszustandsdaten Batterieentladeströme der Versorgungsbatterie erfasst werden. Diese Ausgestaltung der Erfindung ist, beispielsweise zur Ermittlung der zeitlichen Entwicklung des Batterieinnenwiderstandes, insbesondere dann vorteilhaft, wenn die Batterieentladeströme nicht anderweitig bekannt oder herleitbar sind.

Eine weitere Ausgestaltung der Erfindung sieht vor, dass von dem Auswertesystem eine Häufigkeitsverteilung der Batterietemperatur auf Temperaturintervalle und/oder wenigstens eine Verteilung von Werten einer der Batteriekenngrößen Batteriespannung, Batterieentladestrom, Batterieinnenwiderstand oder Batterieleistung in Abhängigkeit von der Batterietemperatur ermittelt und ausgewertet wird, um die Handlungsempfehlung zu generieren. Diese Ausgestaltung der Erfindung berücksichtigt, dass der Batteriezustand der Versorgungsbatterie wesentlich von der Batterietemperatur abhängt. Daher sind die Batterietemperatur und die Abhängigkeit anderer Batteriekenngrößen von der Batterietemperatur besonders wichtige Indikatoren für die Entwicklung des Batteriezustands der Versorgungsbatterie.

Eine weitere Ausgestaltung der Erfindung sieht vor, dass der Energiebedarf aus Zeitanteilen, die auf den Betrieb der Sensorvorrichtung in verschiedenen Betriebsmodi jeweils entfallen, und Leistungen, die für den Betrieb der Sensorvorrichtung in den Betriebsmodi jeweils benötigt werden, ermittelt wird. Diese Ausgestaltung der Erfindung nutzt aus, dass die Sensorvorrichtung in verschiedenen Betriebsmodi in der Regel verschiedene Leistungen benötigt. Daher kann der Energiebedarf der Sensorvorrichtung aus den auf die verschiedenen Betriebsmodi entfallenden Zeitanteilen und den für die Betriebsmodi jeweils benötigten Leistungen ermittelt werden.

Eine weitere Ausgestaltung der Erfindung sieht vor, dass von dem Auswertesystem anhand der Betriebszustandsdaten der Versorgungsbatterie und des Energiebedarfs der Sensorvorrichtung eine Präferenzauslegung der Sensorvorrichtung bestimmt wird und als Handlungsempfehlung die Auslegung der Sensorvorrichtung gemäß der Präferenzauslegung generiert wird. Diese Ausgestaltung der Erfindung ermöglicht, die Auslegung der Sensorvorrichtung den im realen Betrieb der Sensorvorrichtung auftretenden Betriebsbedingungen anzupassen.

Eine weitere Ausgestaltung der Erfindung sieht vor, dass in dem Auswertesystem Batterietypdaten verschiedener Batterietypen vorgehalten werden, von dem Auswertesystem anhand der Betriebszustandsdaten der Versorgungsbatterie, des Energiebedarfs der Sensorvorrichtung und der Batterietypdaten ein Präferenzbatterietyp bestimmt wird und als Handlungsempfehlung der Betrieb der Sensorvorrichtung mit einer Batterie des Präferenzbatterietyps als Versorgungsbatterie generiert wird. Beispielsweise werden dabei als Batterietypdaten eines Batterietyps Datenblattangaben eines Herstellers des Batterietyps und/oder in der Vergangenheit erfasste Betriebszustandsdaten wenigstens einer Batterie des Batterietyps vorgehalten. Ferner werden als Batterietypdaten eines Batterietyps beispielsweise eine Batterienennkapazität, eine Batteriekapazität in Abhängigkeit von einer Batterietemperatur und/oder von einem Batterieentladestrom, eine Ausfallrate, ein Batterieinnenwiderstand, ein maximaler Batterieentladestrom, eine Batterienennspannung und/oder geometrische Batterieabmessungen vorgehalten.

Die vorgenannte Ausgestaltung der Erfindung ermöglicht, einen Batterietyp der Versorgungsbatterie den im realen Betrieb der Sensorvorrichtung auftretenden Betriebsbedingungen anzupassen. Dabei wird die Sensorvorrichtung in einer ersten Betriebsphase mit einer ersten Versorgungsbatterie betrieben und in der ersten Betriebsphase wird anhand der Betriebszustandsdaten der Versorgungsbatterie, des Energiebedarfs der Sensorvorrichtung und der Batterietypdaten ein Präferenzbatterietyp bestimmt, der dem Energiebedarf angepasst ist. Mit anderen Worten werden in der ersten Betriebsphase der im realen Betrieb der Sensorvorrichtung anfallende Energiebedarf und die im realen Betrieb der Sensorvorrichtung anfallenden Betriebsbedingungen sowie ein diesem Energiebedarf und diesen Betriebsbedingungen angepasster Präferenzbatterietyp ermittelt. In einer zweiten Betriebsphase wird die erste Versorgungsbatterie durch eine Batterie des Präferenzbatterietyps ausgetauscht, wenn die erste Versorgungsbatterie keine Batterie des Präferenzbatterietyps ist. Dadurch kann die Sensorvorrichtung in der zweiten Betriebsphase mit einer Versorgungsbatterie betrieben werden, die dem tatsächlichen Energiebedarf und den realen Betriebsbedingungen optimal angepasst ist.

Eine weitere Ausgestaltung der Erfindung sieht vor, dass von dem Auswertesystem als Handlungsempfehlung eine zeitliche Verteilung von Betriebsmodi der Sensorvorrichtung generiert wird. Diese Ausgestaltung der Erfindung ermöglicht, die Verteilung der Betriebsmodi der Sensorvorrichtung den im realen Betrieb der Sensorvorrichtung auftretenden Betriebsbedingungen anzupassen.

Eine weitere Ausgestaltung der Erfindung sieht vor, dass das Auswertesystem in einer Datenwolke realisiert ist. Diese Ausgestaltung der Erfindung ermöglicht, bei der Auswertung der Betriebszustandsdaten in einer Datenwolke abgelegte Daten zu verwenden, so dass diese Daten leicht aktualisiert und erweitert werden können. Außerdem können die Betriebszustandsdaten in der Datenwolke in einfacher Weise anderen Anwendungen zugänglich gemacht werden und insbesondere zur Ergänzung dort gesammelter Batterietypdaten verwendet werden.

Eine weitere Ausgestaltung der Erfindung sieht vor, dass die Betriebszustandsdaten mit der Kommunikationseinheit durch Funkwellen übermittelbar sind. Dies ermöglicht vorteilhaft eine kabellose Übermittlung der Betriebszustandsdaten.

Eine erfindungsgemäße Sensorvorrichtung zur Durchführung des erfindungsgemäße Verfahrens umfasst eine Versorgungsbatterie zur Energieversorgung der Sensorvorrichtung, eine Sensoreinheit, mit der die Betriebszustandsdaten erfassbar sind, und eine Kommunikationseinheit, mit der die Betriebszustandsdaten einem Auswertesystem übermittelbar sind. Eine derartige Sensorvorrichtung ermöglicht die Durchführung des erfindungsgemäßen Verfahrens mit den oben genannten Vorteilen.

Ein erfindungsgemäßes Antriebssystem umfasst eine erfindungsgemäße Sensorvorrichtung zur Erfassung von Maschinenmessdaten zu Zuständen des Antriebssystems. Insbesondere kann das Antriebssystem eine elektrische Maschine aufweisen und die Sensoreinheit der Sensorvorrichtung kann zur Erfassung von Vibrationen und/oder Temperaturen der elektrischen Maschine eingerichtet sein. Alternativ oder zusätzlich kann das Antriebssystem einen Stromrichter aufweisen und die Sensoreinheit der Sensorvorrichtung kann zur Erfassung von Temperaturen des Stromrichters eingerichtet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein Antriebssystem,
- FIG 2: ein Blockdiagramm eines Ausführungsbeispiels einer Sensorvorrichtung und eines Verfahrens zum Betrieb der Sensorvorrichtung,
- FIG 3: eine Verteilung von auf verschiedene Betriebsmodi entfallenden Zeitanteilen einer Sensorvorrichtung,
- FIG 4: Batterietypdaten eines Batterietyps,
- FIG 5: zeitliche Verläufe einer Batterieleistung und einer Batteriespannung einer Versorgungsbatterie,
- FIG 6: eine Häufigkeitsverteilung von Batterietemperaturen einer Versorgungsbatterie.

Einander entsprechende Teile sind in den Figuren mit denselben Bezugszeichen versehen.

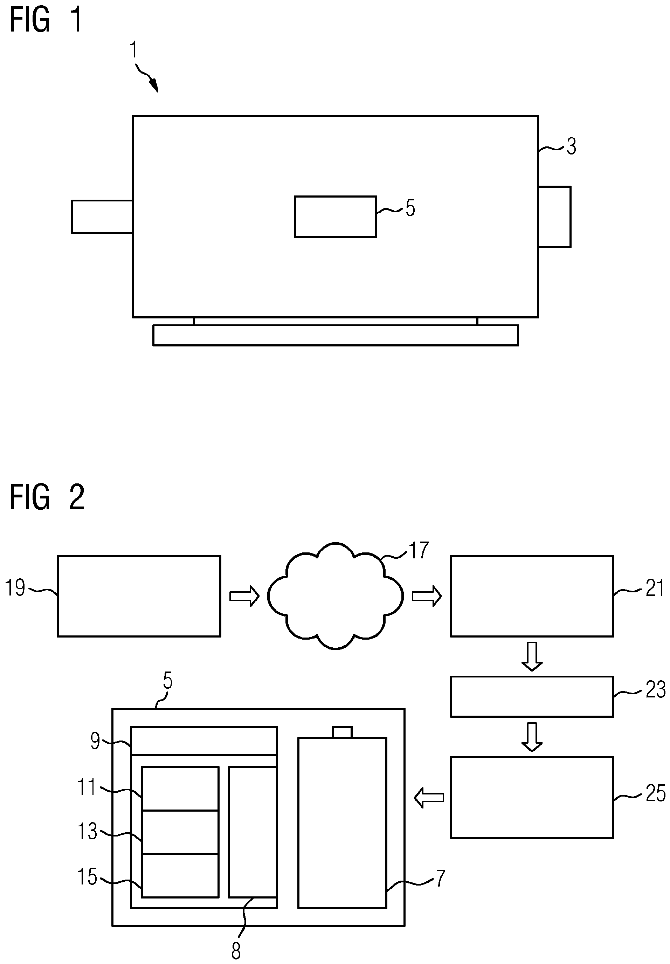

FIG 1 zeigt schematisch ein Antriebssystem 1. Das Antriebssystem 1 umfasst eine rotierende elektrische Maschine 3 und eine Sensorvorrichtung 5 zur Überwachung der elektrischen Maschine 3. Mit der Sensorvorrichtung 5 werden Maschinenmessdaten zu Zuständen der elektrischen Maschine 3 erfasst, beispielsweise Vibrationsmessdaten zu Vibrationen und/oder Temperaturmessdaten zu Temperaturen der elektrischen Maschine 3.

FIG 2 zeigt ein Blockdiagramm eines Ausführungsbeispiels der Sensorvorrichtung 5 und eines Verfahrens zum Betrieb der Sensorvorrichtung 5.

Die Sensorvorrichtung 5 umfasst eine Versorgungsbatterie 7 zur Energieversorgung der Sensorvorrichtung 5, eine Sensoreinheit 8, eine Kommunikationseinheit 9, eine Speichereinheit 11, eine Recheneinheit 13 und eine Zeitgebereinheit 15.

Mit der Sensoreinheit 8 werden die Maschinenmessdaten und Betriebszustandsdaten der Versorgungsbatterie 7 erfasst. Geeignete Betriebszustandsdaten werden unten näher beschrieben.

Mit der Kommunikationseinheit 9 werden von der Sensoreinheit 8 erfasste Maschinenmessdaten und Betriebszustandsdaten, gegebenenfalls nach einer Vorverarbeitung dieser Daten durch die Recheneinheit 13, einem Auswertesystem 17 übermittelt. Die Kommunikationseinheit 9 weist beispielsweise eine Sendeeinheit für Funkwellen auf, mit denen die Daten kabellos übermittelt werden, beispielsweise gemäß einem Bluetooth- oder WLAN-Standard.

Mit der Speichereinheit 11 werden insbesondere Programme zum Betrieb der Sensorvorrichtung 5 gespeichert. Ferner können mit der Speichereinheit 11 beispielsweise von der Sensoreinheit 8 erfasste Maschinenmessdaten und Betriebszustandsdaten zwischengespeichert werden.

Von der Recheneinheit 13 werden mit der Speichereinheit 11 gespeicherte Programme ausgeführt.

Mit der Zeitgebereinheit 15 wird insbesondere ein Taktsignal für die Zeitsteuerung der Sensorvorrichtung 5 vorgegeben.

Das Auswertesystem 17 ist beispielsweise in einer Datenwolke realisiert. Alternativ ist das Auswertesystem 17 beispielsweise auf einem Edge Device realisiert.

In dem Auswertesystem 17 werden Batterietypdaten verschiedener Batterietypen vorgehalten. Beispielsweise werden als Batterietypdaten eines Batterietyps Datenblattangaben 19 eines Herstellers des Batterietyps und/oder in der Vergangenheit erfasste Betriebszustandsdaten wenigstens einer Batterie des Batterietyps vorgehalten.

Von dem Auswertesystem 17 wird eine Auswertung 21 der Betriebszustandsdaten und Batterietypdaten in Abhängigkeit von einem Energiebedarf der Sensorvorrichtung 5 vorgenommen, bei der ein Präferenzbatterietyp bestimmt wird, der den Betriebszustandsdaten und dem Energiebedarf optimal angepasst ist. Als Ergebnis der Auswertung 21 wird von dem Auswertesystem 17 eine Handlungsempfehlung 23 zum Betrieb der Sensorvorrichtung 5 mit einer Batterie des Präferenzbatterietyps als Versorgungsbatterie 7 generiert. Wenn die Versorgungsbatterie 7 keine Batterie des Präferenzbatterietyps ist, wird ein Batterietausch 25 vorgenommen, bei dem die Versorgungsbatterie 7 durch eine Batterie des Präferenzbatterietyps ersetzt wird.

Die Sensorvorrichtung 5 wird in verschiedenen Betriebsmodi M1 bis M4 betrieben. Die Abfolge und die Zeitdauern der Betriebsmodi M1 bis M4 werden vorgegeben, beispielsweise durch eine Programmierung der Sensorvorrichtung 5, und sind daher bekannt, können jedoch durch eine Änderung der Vorgabe geändert werden. Ferner ist die von jedem der Betriebsmodi M1 bis M4 benötigte Leistung bekannt. Der Energiebedarf der Sensorvorrichtung 5 wird aus den Zeitanteilen, die auf die verschiedenen Betriebsmodi M1 bis M4 jeweils entfallen, und den Leistungen, die für den Betrieb der Sensorvorrichtung 5 in den Betriebsmodi M1 bis M4 jeweils benötigt werden, ermittelt.

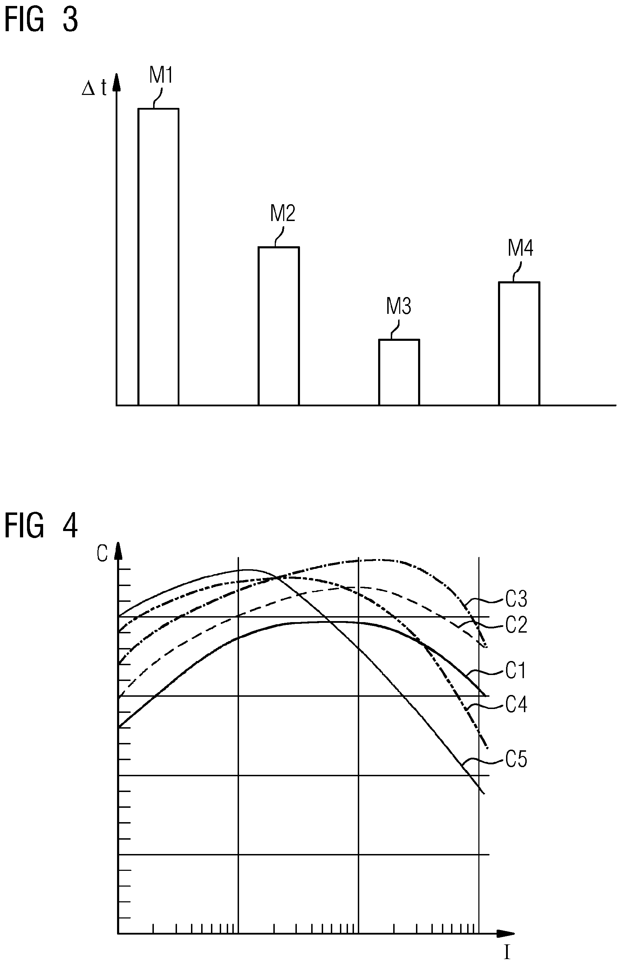

FIG 3 zeigt beispielhaft Zeitanteile Δt, die auf vier verschiedene Betriebsmodi M1 bis M4 der Sensorvorrichtung 5 entfallen. Beispielsweise ist ein erster Betriebsmodus M1 ein Schlafbetrieb, in dem die Sensorvorrichtung 5 vorwiegend inaktiv ist, ein zweiter Betriebsmodus M2 ist ein Messbetrieb zur Messung von Vibrationen der elektrischen Maschine 3, ein dritter Betriebsmodus M3 ist ein Messbetrieb zur Messung von Temperaturen der elektrischen Maschine 3 und ein vierter Betriebsmodus M4 ist ein Kommunikationsbetrieb zur Übermittlung von Daten an das Auswertesystem 17.

FIG 4 zeigt exemplarisch Batterietypdaten eines Batterietyps. Dargestellt sind Kapazitätsverläufe C1 bis C5 einer verfügbaren Batteriekapazität C einer Batterie des Batterietyps in Abhängigkeit von einem logarithmisch dargestellten Batterieentladestrom I für verschiedene Batterietemperaturen, die von einem ersten Kapazitätsverlauf C1 zu einem fünften Kapazitätsverlauf C5 abnehmen. Alternativ oder zusätzlich können als Batterietypdaten eines Batterietyps beispielsweise eine Batterienennkapazität, eine Ausfallrate, ein Batterieinnenwiderstand, ein maximaler Batterieentladestrom, eine Batterienennspannung und/oder geometrische Batterieabmessungen vorgehalten werden.

Als Betriebszustandsdaten werden mit der Sensoreinheit 8 zu verschiedenen Messzeitpunkten t₁, t₂ Batteriespannungen U und Batterietemperaturen T der Versorgungsbatterie 7 erfasst. Zusätzlich kann vorgesehen sein, dass mit der Sensoreinheit 8 als Betriebszustandsdaten auch Batterieentladeströme I der Versorgungsbatterie 7 erfasst wird, wenn die Batterieentladeströme I nicht bekannt beziehungsweise anderweitig ermittelbar ist.

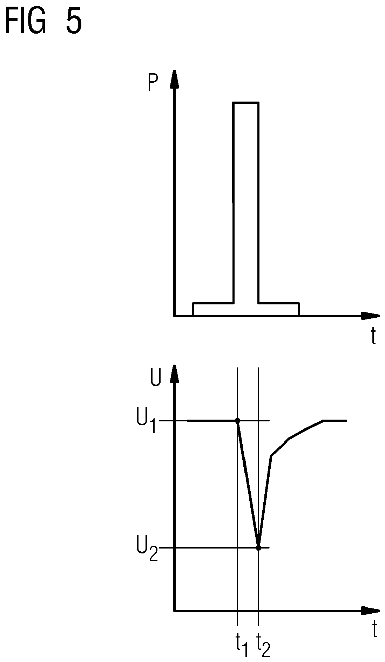

FIG 5 zeigt beispielhaft Verläufe einer Batterieleistung P und einer Batteriespannung U der Versorgungsbatterie 7 in Abhängigkeit von einer Zeit t in einem Funkpulsbetrieb der Sensorvorrichtung 5, in dem die Batterieleistung P nur pulsartig merklich von Null verschieden ist. Beispielsweise wird die Batteriespannung U zu einem ersten Messzeitpunkt t₁ kurz vor einem Leistungspuls und zu einem zweiten Messzeitpunkt t₂ kurz nach dem Leistungspuls gemessen. Aus der Differenz der Batteriespannungen U₁ = U(t₁) und U₂ = U(t₂) und einer Differenz der Batterieentladeströme I₁ = I(t₁) und I₂ = I(t₂) zu diesen Messzeitpunkten t₁, t₂ wird beispielsweise ferner ein Innenwiderstand R der Versorgungsbatterie 7 gemäß R = (U₁ - U₂) / (I₁ - I₂) ermittelt.

Die Betriebszustandsdaten werden bei der Auswertung 21 insbesondere mit statistischen Methoden ausgewertet.

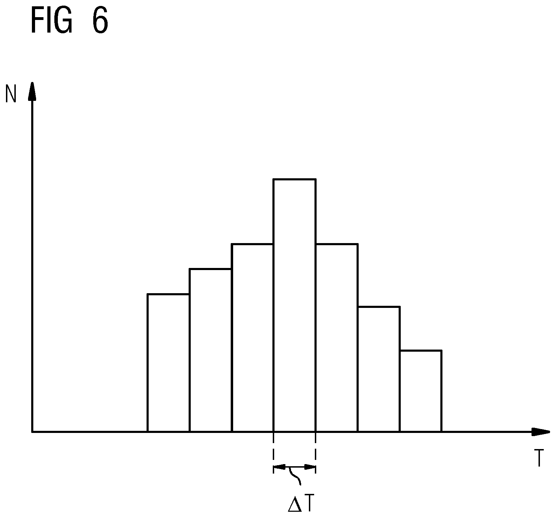

FIG 6 zeigt beispielhaft eine statistische Auswertung erfasster Batterietemperaturen T in Form einer Häufigkeitsverteilung von Batterietemperaturen T, bei der eine Häufigkeit N von Batterietemperaturen T für verschiedene Temperaturintervalle ΔT ermittelt wird.

Alternativ oder zusätzlich kann bei der Auswertung 21 wenigstens eine Verteilung von Werten einer der Batteriekenngrößen Batteriespannung U, Batterieentladestrom I, Batterieinnenwiderstand R oder Batterieleistung P in Abhängigkeit von der Batterietemperatur T oder/und wenigstens ein zeitlicher Verlauf einer dieser Batteriekenngrößen oder der Batterietemperatur T ermittelt werden, um die Handlungsempfehlung 23 zu generieren. Statt einer zeitlichen Auswertung kann auch eine Auswertung in Abhängigkeit von Frequenzen erfolgen, die in einem Pulsbetrieb der Sensorvorrichtung 5 auftreten.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betrieb einer Sensorvorrichtung (5), die eine Versorgungsbatterie (7) zur Energieversorgung der Sensorvorrichtung (5), eine Sensoreinheit (8), mit der Betriebszustandsdaten der Versorgungsbatterie (7) erfassbar sind, und eine Kommunikationseinheit (9), mit der die Betriebszustandsdaten einem Auswertesystem (17) übermittelbar sind, aufweist, wobei
- mit der Sensoreinheit (8) zu verschiedenen Messzeitpunkten (t₁, t₂) Betriebszustandsdaten der Versorgungsbatterie (7) erfasst werden,
- mit der Kommunikationseinheit (9) die Betriebszustandsdaten an das Auswertesystem (17) übermittelt werden und
- von dem Auswertesystem (17) ein Energiebedarf der Sensorvorrichtung (5) ermittelt und anhand der Betriebszustandsdaten und des Energiebedarfs eine Handlungsempfehlung zum optimierten Betrieb der Sensorvorrichtung (5) generiert wird.

2. Verfahren nach Anspruch 1,
**dadurch gekennzeichnet, dass** als Betriebszustandsdaten Batteriespannungen (U) und Batterietemperaturen (T) der Versorgungsbatterie (7) erfasst werden.

3. Verfahren nach Anspruch 2,
**dadurch gekennzeichnet, dass** als Betriebszustandsdaten Batterieentladeströme (I) der Versorgungsbatterie (7) erfasst werden.

4. Verfahren nach Anspruch 2 oder 3,
**dadurch gekennzeichnet, dass** von dem Auswertesystem (17) eine Häufigkeitsverteilung der Batterietemperatur auf Temperaturintervalle (ΔT) und/oder wenigstens eine Verteilung von Werten einer der Batteriekenngrößen Batteriespannung (U), Batterieentladestrom (I), Batterieinnenwiderstand oder Batterieleistung (P) in Abhängigkeit von der Batterietemperatur (T) ermittelt und ausgewertet wird, um die Handlungsempfehlung zu generieren.

5. Verfahren nach einem der vorhergehenden Ansprüche,
**dadurch gekennzeichnet, dass** der Energiebedarf aus Zeitanteilen (Δt), die auf den Betrieb der Sensorvorrichtung (5) in verschiedenen Betriebsmodi (M1 bis M4) jeweils entfallen, und Leistungen, die für den Betrieb der Sensorvorrichtung (5) in den Betriebsmodi (M1 bis M4) jeweils benötigt werden, ermittelt wird.

6. Verfahren nach einem der vorhergehenden Ansprüche,
**dadurch gekennzeichnet, dass** von dem Auswertesystem (17) anhand der Betriebszustandsdaten und des Energiebedarfs eine Präferenzauslegung der Sensorvorrichtung (5) bestimmt wird und als Handlungsempfehlung die Auslegung der Sensorvorrichtung (5) gemäß der Präferenzauslegung generiert wird.

7. Verfahren nach einem der vorhergehenden Ansprüche,
**dadurch gekennzeichnet, dass** in dem Auswertesystem (17) Batterietypdaten verschiedener Batterietypen vorgehalten werden, von dem Auswertesystem (17) anhand der Betriebszustandsdaten, des Energiebedarfs und der Batterietypdaten ein Präferenzbatterietyp bestimmt wird und als Handlungsempfehlung der Betrieb der Sensorvorrichtung (5) mit einer Batterie des Präferenzbatterietyps als Versorgungsbatterie (7) generiert wird.

8. Verfahren nach Anspruch 7,
**dadurch gekennzeichnet, dass** als Batterietypdaten eines Batterietyps Datenblattangaben (19) eines Herstellers des Batterietyps und/oder in der Vergangenheit erfasste Betriebszustandsdaten wenigstens einer Batterie des Batterietyps vorgehalten werden.

9. Verfahren nach Anspruch 7 oder 8,
**dadurch gekennzeichnet, dass** als Batterietypdaten eines Batterietyps eine Batterienennkapazität, eine Batteriekapazität (C) in Abhängigkeit von einer Batterietemperatur (T) und/oder von einem Batterieentladestrom (I), eine Ausfallrate, ein Batterieinnenwiderstand, ein maximaler Batterieentladestrom, eine Batterienennspannung und/oder geometrische Batterieabmessungen vorgehalten werden.

10. Verfahren nach einem der vorhergehenden Ansprüche,
**dadurch gekennzeichnet, dass** von dem Auswertesystem (17) als Handlungsempfehlung eine zeitliche Verteilung von Betriebsmodi (M1 bis M4) der Sensorvorrichtung (5) generiert wird.

11. Verfahren nach einem der vorhergehenden Ansprüche,
**dadurch gekennzeichnet, dass** das Auswertesystem (17) in einer Datenwolke realisiert ist.

12. Verfahren nach einem der vorhergehenden Ansprüche,
**dadurch gekennzeichnet, dass** die Betriebszustandsdaten mit der Kommunikationseinheit (9) durch Funkwellen übermittelbar sind.

13. Sensorvorrichtung (5) zur Durchführung des Verfahrens gemäß einem der vorhergehenden Ansprüche, die Sensorvorrichtung (5) umfassend,
- eine Versorgungsbatterie (7) zur Energieversorgung der Sensorvorrichtung (5),
- eine Sensoreinheit (8), mit der die Betriebszustandsdaten erfassbar sind, und
- eine Kommunikationseinheit (9), mit der die Betriebszustandsdaten einem Auswertesystem (17) übermittelbar sind.

14. Antriebssystem (1) mit einer gemäß Anspruch 13 ausgebildeten Sensorvorrichtung (5) zur Erfassung von Maschinenmessdaten zu Zuständen des Antriebssystems (1).

15. Antriebssystem (1) nach Anspruch 14,
**gekennzeichnet durch** eine elektrische Maschine (3).
